(19) Europäisches Patentamt
European Patent Office
Office européen des brevets

(11) **EP 3 564 526 B1**

(12) **EUROPEAN PATENT SPECIFICATION**

(45) Date of publication and mention of the grant of the patent:
**14.09.2022 Bulletin 2022/37**

(21) Application number: **18829711.3**

(22) Date of filing: **27.06.2018**

(51) International Patent Classification (IPC):
**F03D 17/00** *(2016.01)*

(52) Cooperative Patent Classification (CPC):
**F03D 17/00;** F05B 2260/80; F05B 2270/32;
F05B 2270/332; F05B 2270/334

(86) International application number:
**PCT/CN2018/093013**

(87) International publication number:
**WO 2019/178974 (26.09.2019 Gazette 2019/39)**

(54) **METHOD, ELECTRONIC DEVICE AND STORAGE MEDIA FOR MONITORING A FATIGUE DAMAGE OF A BLADE OF A WIND TURBINE UNIT**

VERFAHREN, ELEKTRONISCHE VORRICHTUNG UND SPEICHERMEDIUM ZUR ÜBERWACHUNG EINES ERMÜDUNGSSCHADENS EINES WINDKRAFTANLAGENROTORBLATTS

PROCÉDÉ, DISPOSITIF ÉLECTRONIQUE, ET SUPPORTS D'INFORMATIONS POUR SURVEILLER L'ENDOMMAGEMENT PAR FATIGUE D'UNE PALE DE ROTOR D'ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2018 CN 201810247182**

(43) Date of publication of application:
**06.11.2019 Bulletin 2019/45**

(73) Proprietor: **Beijing Goldwind Smart Energy Service Co., Ltd.**
**Beijing 100176 (CN)**

(72) Inventors:
• **HAO, Jifang**
**Beijing 100176 (CN)**

• **JIA, Zhiqiang**
**Beijing 100176 (CN)**
• **LIU, Fang**
**Beijing 100176 (CN)**

(74) Representative: **Hoffmann Eitle**
**Patent- und Rechtsanwälte PartmbB**
**Arabellastraße 30**
**81925 München (DE)**

(56) References cited:
**WO-A2-2010/069926      CN-A- 102 968 669**
**CN-A- 105 508 147      CN-A- 105 938 481**
**CN-A- 106 384 163      CN-A- 106 762 454**
**CN-A- 106 846 170      US-A- 4 525 633**
**US-A1- 2013 136 594**

## Description

### TECHNICAL FIELD

The present disclosure generally relates to the field of failure monitoring technique of a blade of a wind turbine unit, and more specifically, to a method, electronic device and storage medium for monitoring a fatigue damage of a blade of a wind turbine unit.

### BACKGROUND

Wind power generation develops very fast in the past few years, together with damage problems of wind power generation facilities, of which a blade cracking is the severest one.

The causes of blade failures may be as follows: (i) design defects, the current design may lack sufficient consideration for wind speed, wind direction, rotation flow, inverse lift, chattering or counter weight, etc.; (ii) poor manufacturing quality, and artificially caused quality problems in transporting, installation and debugging; (iii) the external environment is complex and variable, after a long-term periodic and non-periodic movement of the blade, the material of the blade may change inside, causing microscopic damages which may increase exponentially and result in visible damages eventually. The current blade anomaly monitoring techniques are not applicable in many practical situations, and unable to monitor blade anomalies accurately.

D1 (US20130136594A1) discloses a wind turbine and its control method. The wind turbine includes: a rotor rotatable about a rotor axis and having a plurality of blades rotatably fitted to a hub about a blade axis and a plurality of pitch actuators, each pitch actuator configured to adjust a pitch angle of one of the blades, a brake controlled by a brake actuator and configured to arrest the rotor, a rotating electric machine connected to the rotor, an inverter configured to control the rotating electric machine, anda control system which includes a plurality of image reflection measuring devices configured to detect a designated deformation of each of the blade. The control method comprises: retrieving information from the plurality of image reflection measuring devices, said retrieved information associated with the designated deformation of any of the plurality of blades; emitting at least one control signal correlated to the retrieved information; and using the emitted at least one control signal to selectively control at least one of: the pitch actuators, the brake actuator, and the inverter.

### SUMMARY

The present disclosure may provide a method for monitoring a fatigue damage of a blade of a wind turbine unit. The method comprises: acquiring real-time vibration data and wind speed data of a wind turbine unit; extracting an operational characteristic and an environment characteristic of a blade according to the vibration data, the wind speed data and a Term Frequency-Inverse Document Frequency (TF-IDF) algorithm; combining the operational characteristic and the environment characteristic according to a failure mechanism of the blade, to obtain a non-periodic load characteristic of the blade; and determining an accumulated fatigue value of the blade over time according to the non-periodic load characteristic and a Palmgren-Miner (PM) fatigue theory.

The present disclosure may further provide an electronic device. The electronic device comprises: a memory storing a computer program; and a processor for performing the computer program stored in the memory, to implement the above described method of the present disclosure.

The present disclosure may further provide a computer readable storage medium storing a computer program thereon, wherein the computer program, when executed by a computer, causes the computer to implement the above described method of the present disclosure.

In various embodiments of the present disclosure, a fatigue damage of a blade of a wind turbine unit may be monitored by combining the non-periodic load characteristic and the PM fatigue theory, wherein the on-periodic load characteristic as a root cause of blade failures may be considered, thereby to allow for monitoring blade anomalies accurately.

### BRIEF DESCRIPTION OF THE DRAWINGS

The abovementioned and/or additional aspects and advantages of the present disclosure will become apparent and may be better understood from the following description of embodiments in connection with the accompanying drawings, wherein:

Fig. 1 is a flow chart of a method for monitoring a fatigue damage of a blade of a wind turbine unit according to a first embodiment of the present disclosure;

Fig. 2 is a flow chart of a method for monitoring a fatigue damage of a blade of a wind turbine unit according to a second embodiment of the present disclosure;

Fig. 3 schematically illustrates a fatigue curve obtained by the method for monitoring a fatigue damage of a blade of a wind turbine unit according to the second embodiment of the present disclosure;

Fig. 4 schematically illustrates a fatigue curve obtained by the method for monitoring a fatigue damage of a blade of a wind turbine unit according to the second embodiment of the present disclosure;

Fig. 5 is a flow chart of a method for monitoring a fatigue damage of a blade of a wind turbine unit according to a third embodiment of the present disclosure;

Fig. 6 schematically illustrates a load peak ratio curve related to a method for monitoring a fatigue damage of a blade of a wind turbine unit according to the present disclosure.

## DETAILED DESCRIPTION

Embodiments of the present disclosure will be described in detail below, and examples of the described embodiments will be illustrated in the accompanying drawings, in which the same of similar reference numerals may throughout refer to the same of similar elements or elements with the same of similar functions. The embodiments described below with reference to the accompanying drawings are intended to be illustrative, for the purpose of explaining the present disclosure only, and are not to be construed as limiting for the present disclosure.

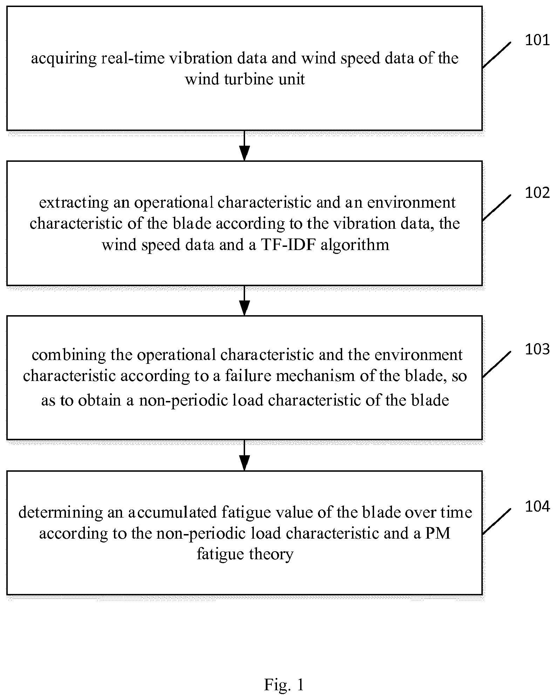

Fig. 1 schematically illustrates a flow chart of a method for monitoring a fatigue damage of a blade of a wind turbine unit according to a first embodiment of the present disclosure.

At step 101, real-time vibration data and wind speed data of the wind turbine unit are acquired. Specifically, the real-time vibration data and wind speed data of the wind turbine unit may be acquired by collecting data monitored by sensors of the wind turbine unit.

At step 102, an operational characteristic and an environment characteristic of the blade are extracted according to the vibration data, the wind speed data and a Term Frequency-Inverse Document Frequency (TF-IDF) algorithm. The operational characteristic may be characterized by the vibration data, and the environment characteristic may be characterized by the wind speed data.

At step 103, the operational characteristic and the environment characteristic are combined according to a failure mechanism of the blade to obtain a non-periodic load characteristic of the blade. The failure mechanism of the blade may refer to after a long-term periodic and non-periodic movement of the blade, especially a non-periodic movement that may cause a large load on the blade (for example, a movement or turbulence etc. with a small wind speed but a large vibration), the material of the blade may change inside, generating microscopic damages which may increase exponentially over time and result in visible damages eventually, such as a cracking or break.

At step 104, an accumulated fatigue value of the blade over time is determined according to the non-periodic load characteristic and a PM fatigue theory. The accumulated fatigue value or its varying characteristic may characterize the extent of the fatigue damage of the blade. For example, if the accumulated fatigue value exceeds a preset first threshold, it may indicate that the degree of fatigue damage of the blade is large, and the blade of the wind turbine unit has a large risk of cracking; alternatively, if a change rate of the accumulated fatigue value exceeds a preset second threshold, it may indicate that the degree of fatigue damage of the blade is large, and the blade of the wind turbine unit has a large risk of cracking. It should be noted here that, in practical applications, the above thresholds may be set or adjusted according to actual conditions or experience. It is not difficult to understand that, in practical applications, the degree of fatigue damage of the blade may also be determined based on other characteristics of the accumulated fatigue value.

For ease of understanding, the TF-IDF algorithm is briefly described below.

The TF-IDF algorithm is a commonly used statistical method for natural language processing, generally, it may be used to assess the importance of a word to a document in a document set or a corpus. The importance of a word may increase as the frequency it appears in a document increase, while may decrease as the frequency it appears in a corpus increase. In a given document, the Term Frequency (TF) may refer to the frequency at which a given word appears in the document. The term frequency may be usually normalized in some form to prevent it from being biased towards long documents. Inverse Document Frequency (IDF) may be a measure of the universal importance of a word. The IDF of a word may be obtained by dividing the total number of documents by the number of documents containing the word and then taking the logarithm of the ratio. A high word frequency of a word within a document and a low document frequency of the word in the entire corpus may generate a highly weighted TF-IDF. Therefore, the TF-IDF algorithm may be able to filter out common words and retain important words. In general, the TF-IDF algorithm may be expressed by the following formula (1):

$$W_{ij} = \log\left(1 + f_{ij}\right) \times \log\left(\frac{N}{1+n_j}\right) \tag{1}$$

wherein, $W_{ij}$ is a TF-IDF weight of word $j$ in document $i$, $f_{ij}$ is a normalized word frequency of word $j$ in document $i$, $N$ is the total number of documents in the corpus, and $n_j$ is the number of documents containing the word $j$ in the corpus.

In the above step 102, according to the vibration data and the wind speed data, the TF-IDF algorithm described above is used to extract the operational characteristic and the environmental characteristic of the blade. Specifically, the vibration data and the wind speed data may be used as words in the TF-IDF algorithm. The measured wind speed may have different values, for example, any value between 1 m/s and 20 m/s. The wind speed data measured in one year may be divided into a plurality of documents, and the TF-IDF weight of 1 m/s in some document and the TF-IDF weight of 2 m/s in some document, and so on, may be calculated according to the TF-IDF algorithm. Similarly, the vibration data may be processed similarly. In this manner, the operational characteristic and the environmental characteristic of the blade may be extracted.

As described above, in the first embodiment, the monitoring of the fatigue damage of the blade of the wind turbine unit may take into account the on-periodic load characteristic as a root cause of blade failures may be considered, thereby to allow for monitoring blade anomalies accurately.

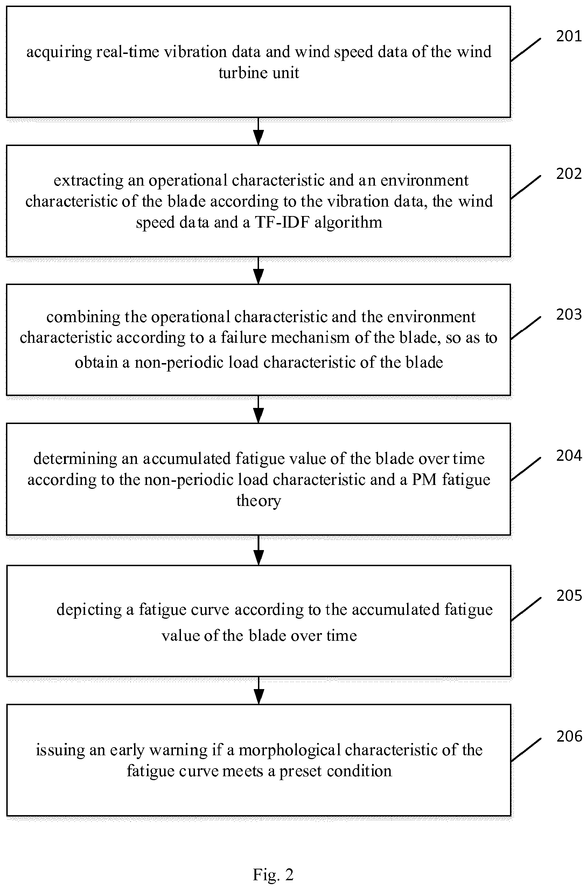

Fig. 2 schematically illustrates a flow chart of a method for monitoring a fatigue damage of a blade of a wind turbine unit according to a second embodiment of the present disclosure.

Steps 201 to 204 are the same as steps 101 to 104 described above with reference to Fig. 1, which are not described herein again.

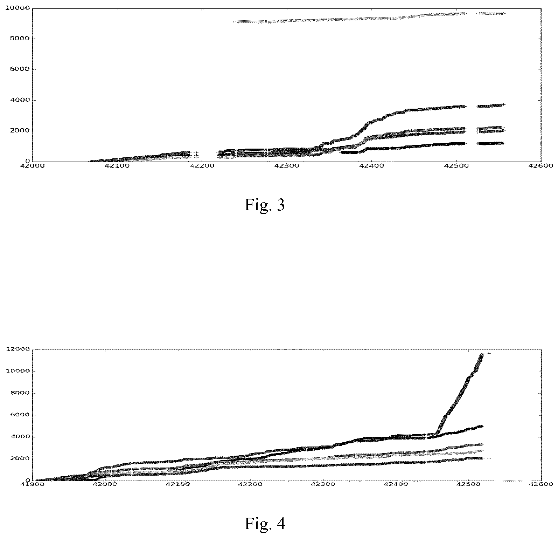

At step 205, a fatigue curve may be depicted according to the accumulated fatigue value of the blade over time. For ease of understanding, Fig. 3 and Fig. 4 respectively illustrate different fatigue curves obtained by the method for monitoring a fatigue damage of a blade of a wind turbine unit according to the second embodiment of the present disclosure, wherein the abscissa may represent time (for convenience of drawing, the time may be represented by a numerical value) and the ordinate may represent the fatigue value, and different curves in the same figure may represent fatigue curves of different wind turbine units in the same wind field.

At step 206, an early warning may be issued if a morphological characteristic of the depicted fatigue curve meets a preset condition.

In practical applications, the performance of the fatigue curve of the failed blade may be pre-summarized based on a large number of fatigue curves. For example, a first case may be a surge in fatigue value represented by the highest fatigue curve as shown in Fig. 3, and a second case may be a sharp change in the slope of the highest fatigue curve as shown in Fig. 4.

If the fatigue curve depicted at step 205 exhibits, for example, the first case or the second case described above, it may be determined that the blade of the corresponding wind turbine unit has a large risk of cracking, and an early warning is required to prompt the operation and maintenance engineer to pay attention.

It should be noted that the performance of the fatigue curve of the above-mentioned failed blade is merely exemplary, and may be set or adjusted according to actual conditions or requirements in practical applications. Of course, in practical applications, whether there is a large risk of cracking in the blades of the corresponding wind turbine unit may also be determined according to other morphological characteristics of the fatigue curve, which are not enumerated herein.

As described above, in the second embodiment, the fatigue curve may be depicted according to the accumulated fatigue value of the blade over time, and an early warning may be issued if the morphological characteristics of the fatigue curve meet the preset conditions. In this way, by observing the fatigue curve depicted, it may be possible to determine whether there is a large risk of cracking in the blades of the corresponding wind turbine unit, so as to monitor blade anomalies intuitively and efficiently.

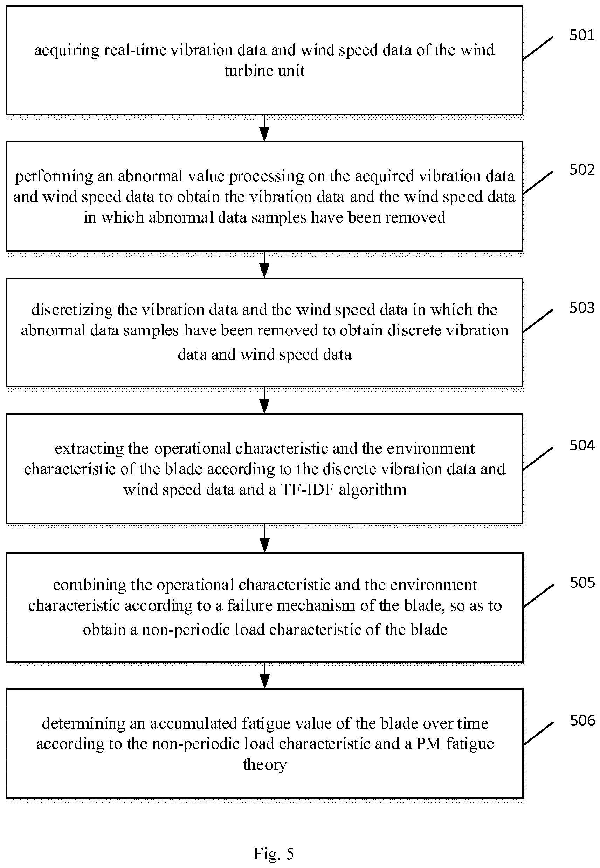

Fig. 5 schematically illustrates a flow chart of a method for monitoring a fatigue damage of a blade of a wind turbine unit according to a third embodiment of the present disclosure.

At step 501, real-time vibration data and wind speed data of the wind turbine unit are acquired.

At step 502, an abnormal value processing may be performed on the acquired vibration data and wind speed data to obtain the vibration data and wind speed data in which abnormal data samples have been removed.

Optionally, at step 503, the vibration data and wind speed data in which abnormal data samples have been removed may be discretized to obtain discrete vibration data and wind speed data. In practical applications, since the acquired raw vibration data and wind speed data may generally be continuous values, these continuous values may be discretized for subsequent feature extraction, this is a better manner obtained by comprehensively evaluating the data amount, the calculation amount, and the precision degree. Of course, in practical applications, the discretization processing way may be adjusted according to specific conditions.

At step 504, an operational characteristic and an environment characteristic of the blade may be extracted according to the discrete vibration data and wind speed data and the TF-IDF algorithm. The operational characteristic may be characterized by the vibration data, and the environment characteristic may be characterized by the wind speed data.

Steps 505 and 506 are the same as steps 103 and 104 described above with reference to Fig. 1, which are not described herein again.

As described above, in the third embodiment, abnormal data samples may be removed, and the vibration data and wind speed data in which abnormal data samples have been removed may be discretized. In this way, the accuracy of the data may be guaranteed, while the calculation efficiency may also be improved, so as to monitor blade anomalies accurately and efficiently.

In addition, in various embodiments of the present disclosure, the real-time vibration data of the wind turbine unit may comprise a first cabin acceleration parallel to a bearing direction of a generator of the wind turbine unit, and a second cabin acceleration perpendicular to the bearing direction. In this case, steps 102, 202 or 504 for extracting the operational characteristic and an the environment characteristic of the blade may comprise: performing a window segmentation on the vibration data and the wind speed data within a preset time period; applying the first cabin acceleration, the second cabin acceleration and the wind speed in each window to the TF-IDF algorithm to obtain the TF-IDF value corresponding to the window; according to a TF-IDF value of each window, calculating a vector distance of the first cabin acceleration, the second cabin acceleration and the wind speed in the window relative to all the windows, respectively, wherein the vector distance of the first cabin acceleration and the vector distance of the second cabin acceleration may correspond to the operational characteristic, and the vector distance of the wind speed may correspond to the environment characteristic.

It may be understood that the above preset time period may be determined according to actual conditions to avoid the data amount is too small to recognize the fatigue condition of the blade. If the above window segmentation is too coarse, it is not conducive to the feature extraction, however, if the window segmentation is too fine, it may result in large calculation amount, slow speed, and high calculation cost. The specific window segmentation manner may be determined according to the actual situations, which is not detailed herein.

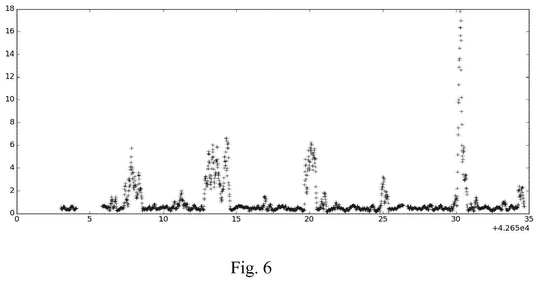

Moreover, with respect to steps 103, 203 or 505 for obtaining the non-periodic load characteristic of the blade, those skilled in the art will appreciate that the greater the load peak ratio of the blade, the greater the non-periodic load the blade subjected to. Fig. 6 schematically illustrates a load peak ratio curve related to a method for monitoring a fatigue damage of a blade of a wind turbine unit according to the present disclosure, wherein the abscissa may represent time (for convenience of drawing, time may be represented by a numerical value), and the ordinate may represents the peak load ratio of the blade.

In practical applications, based on the design and production of the blade, it may be considered that the blade may be able to bear the load if the load peak ratio is less than or equal to a preset threshold, and the load peak ratio greater than the preset threshold may be considered as the non-periodic load characteristic that affects the blade life. The preset threshold may be determined according to actual conditions, which is not specifically described herein. Therefore, in practical applications, steps 103, 203 or 505 for obtaining the non-periodic load characteristic of the blade may comprise: obtaining a first load peak ratio according to the vector distance of the first cabin acceleration and the vector distance of the wind speed; obtaining a second load peak ratio according to the vector distance of the second cabin acceleration and the vector distance of the wind speed; selecting a larger value of the first load peak ratio and the second load peak ratio; determining the selected value is the non-periodic load characteristic of the blade if the selected value is greater than the preset threshold.

In addition, in practical applications, steps 104, 204 or 506 for determining the accumulated fatigue value of the blade over time may comprise: obtaining a fatigue life at a currently applied load stress level according to the non-periodic load characteristic of the blade and a constant associated with the blade material; obtaining the accumulated fatigue value of the blade over time according to the fatigue life and a PM fatigue theory.

Specifically, the fatigue life at the currently applied load stress level may be calculated using the following formula (2):

$$N_i = \frac{1}{e^{\alpha * S_i}} \tag{2}$$

wherein $N_i$ is the fatigue life at the currently applied load stress level, $S_i$ is the current non-periodic load characteristic of the blade, and $\alpha$ is the constant associated with the blade material.

According to the PM theory, the damage caused by each action of the non-periodic load characteristic to components may be linearly accumulated, as represented by the following formula (3):

$$D = \sum_i^n \frac{1}{N_i} \qquad\qquad (3)$$

wherein D is the damage degree of the component, $N_i$ is the fatigue life at the currently applied load stress level, and n is the amount of the variable amplitude load.

The fatigue life may be combined with the PM fatigue theory, and the formula (2) may be substituted into the formula (3), the calculation formula (4) of the accumulated fatigue value caused by the non-periodic load of the blade may be obtained:

wherein F is the accumulated fatigue value caused by the non-periodic load of the blade, and $pr_i$ is the same as $S_i$, representing the current non-periodic load characteristic of the blade.

Over time, the number of non-periodic loads may continually increase, and the accumulated fatigue value of the blade may increase accordingly, thus a fatigue curve changes over time may be obtained, as shown in Fig. 3 and Fig. 4.

It can be seen that, according to an embodiment of the present disclosure, the non-periodic load characteristic may be obtained according to the load peak ratio of the blade of the wind turbine unit, and then the non-periodic load characteristic and the PM fatigue theory may be combined to monitor the fatigue damage of the blade. In general, the non-periodic load characteristic determined from the load peak ratio may be more accurate, allowing for more accurate monitoring of blade anomalies.

In addition, embodiments of the present disclosure may further provide an electronic device. The electronic device comprises: a memory storing a computer program; and a processor for performing the computer program stored in the memory, to implement the method of any of the above described embodiments of the present disclosure.

In addition, embodiments of the present disclosure may further provide a computer readable storage medium storing a computer program thereon, wherein the computer program, when executed by a computer, causes the computer to implement the method of any of the above described embodiments of the present disclosure.

It should be noted that, the various embodiments of the present disclosure described herein are exemplary merely and not limiting.

**Claims**

1. A method for monitoring a fatigue damage of a blade of a wind turbine unit, **characterized by** comprising:

   acquiring (101, 201, 501) real-time vibration data and wind speed data of the wind turbine unit;
   extracting (102, 202) an operational characteristic and an environment characteristic of the blade according to the vibration data, the wind speed data and a Term Frequency-Inverse Document Frequency (TF-IDF) algorithm;
   combining (103, 203, 505) the operational characteristic and the environment characteristic according to a failure mechanism of the blade, so as to obtain a non-periodic load characteristic of the blade; and
   determining (104, 204, 506) an accumulated fatigue value of the blade over time according to the non-periodic load characteristic and a Palmgren-Miner (PM) fatigue theory.

2. The method of claim 1, wherein the vibration data comprises a first cabin acceleration parallel to a bearing direction of a generator of the wind turbine unit, and a second cabin acceleration perpendicular to the bearing direction;
   extracting (102, 202) the operational characteristic and the environment characteristic of the blade comprises:

   performing a window segmentation on the vibration data and the wind speed data within a preset time period;
   applying the first cabin acceleration, the second cabin acceleration and the wind speed in each window to the TF-IDF algorithm to obtain a TF-IDF value corresponding to the window;
   calculating, according to the TF-IDF value of each window, a vector distance of the first cabin acceleration, the second cabin acceleration and the wind speed in the window relative to all the windows, respectively, wherein the vector distance of the first cabin acceleration and the vector distance of the second cabin acceleration correspond to the operational characteristic, and the vector distance of the wind speed corresponds to the environment characteristic.

3. The method of claim 2, wherein obtaining (103, 203, 505) the non-periodic load characteristic of the blade comprises:

   obtaining a first load peak ratio according to the vector distance of the first cabin acceleration and the vector distance of the wind speed;
   obtaining a second load peak ratio according to the vector distance of the second cabin acceleration and the vector distance of the wind speed;
selecting a larger value of the first load peak ratio and the second load peak ratio; and
determining the selected value is the non-periodic load characteristic of the blade if the selected value is greater than a preset threshold.

4. The method of any of claims 1-3, wherein determining (104, 204, 506) the accumulated fatigue value of the blade over time comprises:

obtaining a fatigue life at a currently applied load stress level according to the non-periodic load characteristic and a constant associated with a material of the blade; and
obtaining the accumulated fatigue value of the blade over time according to the fatigue life and the PM fatigue theory.

5. The method of any of claims 1-4, further comprising:

depicting (205) a fatigue curve according to the accumulated fatigue value of the blade over time; and
issuing (206) an early warning if a morphological characteristic of the fatigue curve meets a preset condition.

6. The method of any of claims 1-5, further comprising:
before extracting (102, 202) the operational characteristic and the environment characteristic of the blade, performing (502) an abnormal value processing on the acquired vibration data and wind speed data to obtain the vibration data and the wind speed data in which abnormal data samples have been removed.

7. The method of claim 6, further comprising:

discretizing (503) the vibration data and the wind speed data in which the abnormal data samples have been removed to obtain discrete vibration data and wind speed data, wherein
extracting (102, 202) the operational characteristic and the environment characteristic of the blade comprises:
extracting (504) the operational characteristic and the environment characteristic of the blade according to the discrete vibration data and wind speed data and the TF-IDF algorithm.

8. The method of any of claims 1-7, wherein the real-time vibration data and wind speed data of the wind turbine unit are acquired by collecting data monitored by sensors of the wind turbine unit.

9. An electronic device, comprising:

a memory storing a computer program; and
a processor for performing the computer program stored in the memory to implement the method of any of claims 1-8.

10. A computer readable storage medium storing a computer program thereon, wherein the computer program, when executed by a computer, causes the computer to implement the method of any of claims 1-8.


**Patentansprüche**

1. Verfahren zur Überwachung eines Ermüdungsschadens an einer Schaufel einer Windturbineneinheit, **dadurch gekennzeichnet, dass** es Folgendes umfasst:

Erfassen (101, 201, 501) von Echtzeit-Vibrationsdaten und Windgeschwindigkeitsdaten der Windturbineneinheit;
Extrahieren (102, 202) einer Betriebscharakteristik und einer Umweltcharakteristik der Schaufel gemäß den Vibrationsdaten, den Windgeschwindigkeitsdaten und einem Vorkommenshäufigkeit-inverse-Dokumenthäufigkeit- (TF-IDF-) Algorithmus;
Kombinieren (103, 203, 505) der Betriebscharakteristik und der Umweltcharakteristik gemäß einem Versagensmechanismus der Schaufel, sodass eine nichtperiodische Lastcharakteristik der Schaufel erhalten wird; und
Bestimmen (104, 204, 506) eines akkumulierten Ermüdungswertes der Schaufel mit der Zeit gemäß der nichtperiodischen Lastcharakteristik und einer Palmgren-Miner- (PM-) Ermüdungstheorie.

2. Verfahren nach Anspruch 1, wobei die Vibrationsdaten eine erste Kabinenbeschleunigung parallel zu einer Lagerrichtung eines Generators der Windturbineneinheit und eine zweite Kabinenbeschleunigung senkrecht zu der Lagerrichtung umfassen;
das Extrahieren (102, 202) der Betriebscharakteristik und der Umweltcharakteristik der Schaufel Folgendes umfasst:

Durchführen einer Fenstersegmentierung an den Vibrationsdaten und den Windgeschwindigkeitsdaten innerhalb einer voreingestellten Zeitperiode;
Anwenden der ersten Kabinenbeschleunigung, der zweiten Kabinenbeschleunigung und der Windgeschwindigkeit in jedem Fenster auf den TF-IDF-Algorithmus, um einen dem Fenster entsprechenden TF-IDF-Wert zu erhalten;
Berechnen, gemäß dem TF-IDF-Wert jedes Fensters, eines Vektorabstands der ersten Kabinenbeschleunigung, der zweiten Kabinenbeschleunigung bzw. der Windgeschwindigkeit im Fenster relativ zu allen Fenstern, wobei sich der Vektorabstand der ersten Kabinenbeschleunigung und der Vektorabstand der zweiten Kabinenbeschleunigung auf die Betriebscharakteristik bezieht und der Vektorabstand der Windgeschwindigkeit auf die Umweltcharakteristik bezieht.

3. Verfahren nach Anspruch 2, wobei das Erhalten (103, 203, 505) der nichtperiodischen Lastcharakteristik der Schaufel Folgendes umfasst:

Erhalten eines ersten Lastspitzenverhältnisses gemäß dem Vektorabstand der ersten Kabinenbeschleunigung und dem Vektorabstand der Windgeschwindigkeit;
Erhalten eines zweiten Lastspitzenverhältnisses gemäß dem Vektorabstand der zweiten Kabinenbeschleunigung und dem Vektorabstand der Windgeschwindigkeit;
Auswählen eines größeren Wertes aus dem ersten Lastspitzenverhältnis und dem zweiten Lastspitzenverhältnis; und
Bestimmen des ausgewählten Wertes als die nichtperiodische Lastcharakteristik der Schaufel, wenn der ausgewählte Wert größer als eine voreingestellte Schwelle ist.

4. Verfahren nach einem der Ansprüche 1-3, wobei das Bestimmen (104, 204, 506) des akkumulierten Ermüdungswertes der Schaufel mit der Zeit Folgendes umfasst:

Erhalten einer Ermüdungslebensdauer bei einem aktuell aufgebrachten Lastspannungsniveau gemäß der nichtperiodischen Lastcharakteristik und einer Konstante, die einem Material der Schaufel zugeordnet ist; und
Erhalten des akkumulierten Ermüdungswertes der Schaufel mit der Zeit gemäß der Ermüdungslebensdauer und der PM-Ermüdungstheorie.

5. Verfahren nach einem von Ansprüchen 1-4, weiter umfassend:

Abbilden (205) einer Ermüdungskurve gemäß dem akkumulierten Ermüdungswert der Schaufel mit der Zeit; und
Ausgeben (206) einer Frühwarnung, wenn eine morphologische Charakteristik der Ermüdungskurve eine voreingestellte Bedingung erfüllt.

6. Verfahren nach einem der Ansprüche 1-5, weiter umfassend:
vor dem Extrahieren (102, 202) der Betriebscharakteristik und der Umweltcharakteristik der Schaufel, Durchführen (502) einer Verarbeitung anomaler Werte auf den erfassten Vibrationsdaten und Windgeschwindigkeitsdaten, um die Vibrationsdaten und die Windgeschwindigkeitsdaten zu erhalten, in denen anomale Datenmuster entfernt wurden.

7. Verfahren nach Anspruch 6, weiter umfassend:

Diskretisieren (503) der Vibrationsdaten und der Windgeschwindigkeitsdaten, in denen die anomalen Datenmuster entfernt wurden, um diskrete Vibrationsdaten und Windgeschwindigkeitsdaten zu erhalten, wobei das Extrahieren (102, 202) der Betriebscharakteristik und der Umweltcharakteristik der Schaufel Folgendes umfasst: Extrahieren (504) der Betriebscharakteristik und der Umweltcharakteristik der Schaufel gemäß den diskreten Vibrationsdaten und Windgeschwindigkeitsdaten und dem TF-IDF-Algorithmus.

8. Verfahren nach einem der Ansprüche 1-7, wobei die Echtzeit-Vibrationsdaten und die Windgeschwindigkeitsdaten der Windturbineneinheit durch Sammeln von durch Sensoren der Windturbineneinheit überwachte Daten erhalten werden.

9. Elektronische Vorrichtung, umfassend:

einen Speicher, der ein Computerprogramm speichert; und
einen Prozessor zur Ausführung des im Speicher gespeicherten Computerprogramms, um das Verfahren nach einem der Ansprüche 1-8 zu implementieren.

10. Computerlesbares Speichermedium, das ein Computerprogramm darauf speichert, wobei das Computerprogramm, wenn es von einem Computer ausgeführt wird, den Computer veranlasst, das Verfahren nach einem der Ansprüche 1-8 zu implementieren.

**Revendications**

1. Procédé de surveillance d'une détérioration due à la fatigue d'une pale d'une unité éolienne, **caractérisé en ce qu'**il comprend :

une acquisition (101, 201, 501) de données de vibrations et de données de vitesse de vent en temps réel de l'unité éolienne ;
une extraction (102, 202) d'une caractéristique opérationnelle et d'une caractéristique environnementale de la pale conformément aux données de vibrations, aux données de vitesse de vent et à un algorithme fréquence de terme-fréquence inverse de document (TF-IDF) ;
une combinaison (103, 203, 505) de la caractéristique opérationnelle et de la caractéristique environnementale conformément à un mécanisme de défaillance de la pale, de manière à obtenir une caractéristique de charge non périodique de la pale ; et
une détermination (104, 204, 506) d'une valeur de fatigue accumulée de la pale au fil du temps conformément à la caractéristique de charge non périodique et à une théorie de fatigue de Palmgren-Miner (PM).

2. Procédé selon la revendication 1, dans lequel les données de vibrations comprennent une première accélération de cabine parallèle à une direction de palier d'un générateur de l'unité éolienne, et une seconde accélération de cabine perpendiculaire à la direction de palier ;
l'extraction (102, 202) de la caractéristique opérationnelle et de la caractéristique environnementale de la pale comprend :

une exécution d'une segmentation de fenêtres sur les données de vibrations et les données de vitesse de vent dans une période de temps prédéfinie ;
une application de la première accélération de cabine, de la seconde accélération de cabine et de la vitesse de vent dans chaque fenêtre sur l'algorithme TF-IDF pour obtenir une valeur TF-IDF correspondant à la fenêtre ;
un calcul, conformément à la valeurTF-IDF de chaque fenêtre, d'une distance vectorielle de la première accélération de cabine, de la seconde accélération de cabine et de la vitesse de vent dans la fenêtre par rapport à toutes les fenêtres, respectivement, dans lequel la distance vectorielle de la première accélération de cabine et la distance vectorielle de la seconde accélération de cabine correspondent à la caractéristique opérationnelle, et la distance vectorielle de la vitesse de vent correspond à la caractéristique environnementale.

3. Procédé selon la revendication 2, dans lequel l'obtention (103, 203, 505) de la caractéristique de charge non périodique de la pale comprend :

une obtention d'un premier rapport de pic de charge conformément à la distance vectorielle de la première accélération de cabine et à la distance vectorielle de la vitesse de vent ;
une obtention d'un second rapport de pic de charge conformément à la distance vectorielle de la seconde accélération de cabine et à la distance vectorielle de la vitesse de vent ;
une sélection d'une valeur plus élevée du premier rapport de pic de charge et du second rapport de pic de charge ; et
le fait déterminer que la valeur sélectionnée est la caractéristique de charge non périodique de la pale si la valeur sélectionnée est supérieure à un seuil prédéfini.

4. Procédé selon l'une quelconque des revendications 1-3, dans lequel la détermination (104, 204, 506) de la valeur de fatigue accumulée de la pale au fil du temps comprend :

une obtention d'une résistance à la fatigue à un niveau d'effort appliqué couramment conformément à la caractéristique de charge non périodique et à une constante associée à un matériau de la pale ; et
une obtention de la valeur de fatigue accumulée de la pale au fil du temps conformément à la résistance à la fatigue et à la théorie de fatigue PM.

5. Procédé selon l'une quelconque des revendications 1-4, comprenant en outre :

une représentation (205) d'une courbe de fatigue conformément à la valeur de fatigue accumulée de la pale au fil du temps ; et
une délivrance (206) d'une alerte précoce si une caractéristique morphologique de la courbe de fatigue est conforme à une condition prédéfinie.

6. Procédé selon l'une quelconque des revendications 1-5, comprenant en outre :
avant l'extraction (102, 202) de la caractéristique opérationnelle et de la caractéristique environnementale de la pale, une exécution (502) d'un traitement de valeur anormale sur les données de vibrations et les données de vitesse de vent acquises pour obtenir les données de vibrations et les données de vitesse de vent dans lesquelles des échantillons de données anormaux ont été supprimés.

7. Procédé selon la revendication 6, comprenant en outre :

une discrétisation (503) des données de vibrations et des données de vitesse de vent dans lesquelles les échantillons de données anormaux ont été supprimés pour obtenir des données de vibrations et des données de vitesse de vent discrètes, dans lequel
l'extraction (102, 202) de la caractéristique opérationnelle et de la caractéristique environnementale de la pale comprend : une extraction (504) de la caractéristique opérationnelle et de la caractéristique environnementale de la pale conformément aux données de vibrations et aux données de vitesse de vent discrètes et à l'algorithme TF-IDF.

8. Procédé selon l'une quelconque des revendications 1-7, dans lequel les données de vibrations et les données de vitesse de vent en temps réel de l'unité éolienne sont acquises en collectant des données surveillées par des capteurs de l'unité éolienne.

9. Dispositif électronique, comprenant :

une mémoire stockant un programme informatique ; et
un processeur permettant d'exécuter le programme informatique stocké dans la mémoire pour mettre en œuvre le procédé selon l'une quelconque des revendications 1-8.

10. Support de stockage lisible par ordinateur stockant un programme informatique sur celui-ci, dans lequel le programme informatique, lorsqu'il est exécuté par un ordinateur, amène l'ordinateur à mettre en oeuvre le procédé selon l'une quelconque des revendications 1-8.

acquiring real-time vibration data and wind speed data of the wind turbine unit — 101

extracting an operational characteristic and an environment characteristic of the blade according to the vibration data, the wind speed data and a TF-IDF algorithm — 102

combining the operational characteristic and the environment characteristic according to a failure mechanism of the blade, so as to obtain a non-periodic load characteristic of the blade — 103

determining an accumulated fatigue value of the blade over time according to the non-periodic load characteristic and a PM fatigue theory — 104

Fig. 1

acquiring real-time vibration data and wind speed data of the wind turbine unit —— 201

↓

extracting an operational characteristic and an environment characteristic of the blade according to the vibration data, the wind speed data and a TF-IDF algorithm —— 202

↓

combining the operational characteristic and the environment characteristic according to a failure mechanism of the blade, so as to obtain a non-periodic load characteristic of the blade —— 203

↓

determining an accumulated fatigue value of the blade over time according to the non-periodic load characteristic and a PM fatigue theory —— 204

↓

depicting a fatigue curve according to the accumulated fatigue value of the blade over time —— 205

↓

issuing an early warning if a morphological characteristic of the fatigue curve meets a preset condition —— 206

Fig. 2

Fig. 3

Fig. 4

acquiring real-time vibration data and wind speed data of the wind turbine unit — 501

↓

performing an abnormal value processing on the acquired vibration data and wind speed data to obtain the vibration data and the wind speed data in which abnormal data samples have been removed — 502

↓

discretizing the vibration data and the wind speed data in which the abnormal data samples have been removed to obtain discrete vibration data and wind speed data — 503

↓

extracting the operational characteristic and the environment characteristic of the blade according to the discrete vibration data and wind speed data and a TF-IDF algorithm — 504

↓

combining the operational characteristic and the environment characteristic according to a failure mechanism of the blade, so as to obtain a non-periodic load characteristic of the blade — 505

↓

determining an accumulated fatigue value of the blade over time according to the non-periodic load characteristic and a PM fatigue theory — 506

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130136594 A1